# EUROPEAN PATENT APPLICATION

(11) **EP 3 284 791 A1**
(43) Date of publication of application: **21.02.2018**
(21) Application number: 16778982.5
(22) Date of filing: 29.06.2016
(51) Int. Cl.: C09D 11/16, B43K 7/00, B41M 5/28

(54) **THERMOSENSITIVE ERASABLE NEUTRAL INK AND PREPARATION METHOD THEREFOR**

(71) Applicant: WAP International Group Limited, Qingpu District Shanghai Shanghai 201703 (CN)
(72) Inventor: LUO, Quihong, YANGPU DISTRICT SHANGHAI 200082 (CN)
(74) Representative: London IP Ltd
(86) International application number: PCT/CN2016/087594
(87) International publication number: WO 2018/000226

(57) **Abstract**

The invention has disclosed a kind of temperature-sensitive erasable gel ink, including temperature-sensitive microcapsule granules, dispersing agent, humectant, foam suppressor, rheological additives, lubricant, anticorrosive agent, anti-freezing agent, deionized water and pH regulator. Since a great amount of temperature-sensitive microcapsule granules are added to the gel ink of the invention, the handwriting is clearer and more distinct. Meanwhile, under the condition that there is great quantity of temperature-sensitive microcapsule granules, defects that the traditional temperature-sensitive microcapsule granules are unevenly dispersed and easy to subside are overcome, assuring the stability of the ink and smooth writing.

## Description

### TECHNICAL FIELD

The invention relates to a kind of gel ink, especially relates to a kind of temperature-sensitive erasable gel ink and its preparation method.

### BACKGROUND ART

Since ancient times, writing is a most widely used method for man to record information, transmit and inherit cultures and express thoughts, so as to depict historical footprints. And the common writing tools are pencils, ball pens, pens, gel pens and ink brush, etc. In the writing process, clerical error is the problem frequently encountered in daily life. Usually, errors are corrected by means of being erased with rubber, covered with correction fluid, and removed with rubber tape, etc.

Temperature-sensitive erasable gel ink is the gel ink taking temperature-sensitive microcapsule pigment as the colorant. It uses resin, rubber or other materials to generate heat by friction on the clerical error, till reaching the temperature of pigment vanishing, so as to achieve the purpose of erasability.

### CONTENT OF THE INVENTION

The first purpose of the invention is to obtain a kind of temperature-sensitive erasable gel ink with clearer handwriting, more distinct chroma, good ink stability and smooth writing.

The second purpose of the invention is to obtain a method of preparing temperature-sensitive erasable gel ink with clearer handwriting, more distinct chroma, good ink stability and smooth writing.

The third purpose of the invention is to obtain a writing tool of equipping temperature-sensitive erasable gel ink with clearer handwriting, more distinct chroma, good ink stability and smooth writing.

The technical solution of the invention is as follows:
The invention has provided a kind of temperature-sensitive erasable gel ink, made from the compositions of the following weight percent:

| | |
|---|---|
| temperature-sensitive microcapsule granule | 38-60 weight percent |
| dispersing agent | 0.5-3 weight percent |
| humectant | 3-10 weight percent |
| foam suppressor | 0.01-0.1 weight percent |
| rheological additive | 0.5-3 weight percent |
| lubricant | 0.5-1 weight percent |
| anticorrosive agent | 0.02-0.04 weight percent |
| anti-freezing agent | 3-5 weight percent |
| deionized water | 24-66 weight percent |

the dispersing agent is one or more of sodium polyacrylate, potassium polyacrylate, ammonium polyacrylate and polyol fatty acid ester;
the foam suppressor is one or more of polysiloxane emulsion, polybasic alcohol, polyol ether and wax dispersion emulsion.

Further preferably, the temperature-sensitive erasable gel ink further comprises pH conditioning agent of 0-5 weight percent.

Further preferably, the rheological additive is resin thickener, and the resin thickener is one or more of cellulose-based thickener, polymer modified clay thickener or associative thickener.

Further preferably, weight percent of the resin thickener is 1-3 weight percent.

Further preferably, the temperature-sensitive microcapsule granule is reversible thermo vanishing microcapsule pigment, which comprises electron donor color rendering organic compound (a), electron acceptance compound (b) and reaction medium for controlling the chromogenic reaction of (a) and (b).

Further preferably, vanishing temperature of the reversible thermo vanishing microcapsule pigment is 45-75°C.

Further preferably, the humectant is one or more of N-methyl-2-pyrrolidone, sorbic alcohol, xylosic alcohol, polybasic alcohol or polyethylene propylene glycol.

Further preferably, the lubricant is one or both of polyvinylpyrrolidone or water-soluble phosphate.

The invention has also provided a method for preparing the above temperature-sensitive erasable gel ink, including the following steps: Provide all compositions said in Claim 1; add the compositions to the vacuum reaction pot, which shall be stirred evenly at a speed of 200rpm for 3h, filtered and tested, so as to obtain the temperature-sensitive erasable gel ink.

The invention further provides a writing tool, a beam barrel accommodating the above temperature-sensitive erasable gel ink and a handwriting exporting the temperature-sensitive erasable gel ink in the beam barrel.

Compared with the existing technology, beneficial effects of the invention are:
Compared with the existing temperature-sensitive erasable gel ink, the temperature-sensitive erasable gel ink of the invention has added a great amount of temperature-sensitive microcapsule granules, so that the handwriting is clearer, with more distinct chroma. Meanwhile, under the condition that there is greater quantity of temperature-sensitive microcapsule granules, defects that the traditional temperature-sensitive microcapsule granules are unevenly dispersed and easy to subside are overcome, assuring the stability and smooth writing of the ink.

Certainly, any product for implementing the present invention is not required to have all the above advantages at the same time.

### MODE OF CARRYING OUT THE INVENTION

In order to be understood well, the invention is further described with combination of the embodiments. It shall be understood that, these embodiments are only used to describe the invention, rather than restricting the scope of protection of the invention. Improvements and adjustments made by technicians of the field according to the invention in practical application still belong to the protection scope of the invention.

The invention has provided a kind of temperature-sensitive erasable gel ink, made from the compositions of the following weight percent:

| | |
|---|---|
| temperature-sensitive microcapsule granule | 38-60 weight percent |
| dispersing agent | 0.5-3 weight percent |
| humectant | 3-10 weight percent |
| foam suppressor | 0.01-0.1 weight percent |
| rheological additive | 0.5-3 weight percent |
| lubricant | 0.5-1 weight percent |
| anticorrosive agent | 0.02-0.04 weight percent |
| anti-freezing agent | 3-5 weight percent |
| deionized water | 24-66 weight percent |

wherein, the dispersing agent is one or more of sodium polyacrylate, potassium polyacrylate, ammonium polyacrylate and polyol fatty acid ester;
the foam suppressor is one or more of polysiloxane emulsion, polybasic alcohol, polyol ether and wax dispersion emulsion.

The temperature-sensitive erasable gel ink further comprises pH conditioning agent of 0-5 weight percent.

Compared with the existing gel ink, the temperature-sensitive erasable gel ink of the invention has added a great amount of temperature-sensitive microcapsule granules. It is known by the technicians of the field that, size of the temperature-sensitive microcapsule granules are greater than that of the conventional pigments. When the microcapsule granules are used for preparing gel ink, the phenomenon that microcapsule granules are unevenly dispersed and easy to subside will often appear. Therefore, according to the conventional understanding of the technicians of the field, with the increase of the microcapsule granules in amount, the phenomenon will be more obvious and prominent.

However, by selecting appropriate amount of the compositions above-mentioned, the inventor adds great amount of temperature-sensitive microcapsule granules, so as to improve the clarity of writing and brightness of chroma and assure the stability and smoothness of writing at the same time, namely dispersing agent of 0.5-3 weight percent, humectant of 3-10 weight percent, foam suppressor of 0.01-0.1 weight percent, rheological additives of 0.5-3 weight percent and lubricant of 0.5-1 weight percent.

The rheological additive is resin thickener, with 1-3 weight percent; the resin thickener is one or more of cellulose-based thickener (such as carboxymethylcellulose sodium and hydroxyethyl cellulose), polymer modified clay thickener (such as bentonite and lithium montmorillonite clay), or associative thickener (such as associative polyol polyether, ethyl oxide based polyurethane and associated alkali swelling acrylic ester).

The temperature-sensitive microcapsule granule is reversible thermo vanishing microcapsule pigment, which comprises electron donor color rendering organic compound (a), electron acceptance compound (b) and reaction medium for controlling the chromogenic reaction of (a) and (b). Vanishing temperature of the reversible thermo vanishing microcapsule pigment is 45-75°C, and the temperature-sensitive microcapsule granules are raw materials available on the market.

The humectant is one or more of N-methyl-2-pyrrolidone, sorbic alcohol, xylosic alcohol, polybasic alcohol or polyethylene propylene glycol.

The lubricant is one or both of polyvinylpyrrolidone or water-soluble phosphate.

The anticorrosive agent is one or more of benzoic acid, sodium benzoate, sorbic acid, potassium sorbate or calcium propionate, etc.

The anti-freezing agent is one or more of alcohol, glycol, diethylene glycol, ethylene glycol butyl ether, formamide, calcium chloride, natrium aceticum or magnesium chloride.

The invention has also provided a preparation method of the above temperature-sensitive erasable gel ink, including the following steps:
First of all, add deionized water of 24-66 weight percent, dispersing agent of 0.5-3 weight percent, humectant of 3-10 weight percent and foam suppressor of 0.01-0.1 weight percent to the vacuum mixing reaction pot or 307 stainless steel medical reaction pot. And add temperature-sensitive microcapsule granules of 38-60 weight percent when stirring, till the pigments are evenly dispersed. Then, add rheological additive of 0.5-3 weight percent, lubricant of 0.5-1 weight percent, anticorrosive agent of 0.02-0.04 weight percent and anti-freezing agent of 3-5 weight percent by batches, continue to stir for 3h at a speed of 200rpm, then filtered and tested, so as to obtain the temperature-sensitive erasable gel ink. The invention further provides a writing tool, a beam barrel accommodating the above temperature-sensitive erasable gel ink and a handwriting exporting the temperature-sensitive erasable gel ink in the beam barrel. It uses resin, rubber or other materials to generate heat by friction on the clerical error, till reaching the temperature of pigment vanishing, so as to achieve the purpose of erasability.

To better understand the temperature-sensitive erasable gel ink of the invention, concrete implementation methods of the invention will be introduced through embodiment 1-4, and technical effect of the invention will be explained with such embodiments. Control Group 1 is a magic erasable gel pen with Item No. M-801 sold by True Color Stationery Co., Ltd. and Control Group 2 is an erasable gel pen with Item No. A32338 sold by Deli Group Co., Ltd.

### Embodiment 1

First of all, 35.0g deionized water, 2.5g potassium polyacrylate (dispersing agent), 4g sorbic alcohol (humectant) and 0.03g polysiloxane emulsion (foam suppressor) are added to the vacuum mixing reaction pot. And 38.0g temperature-sensitive microcapsule granules (vanishing temperature of 55°C) are added when stirring, till the pigments are evenly dispersed; Then 1g carboxymethylcellulose sodium (rheological additive), 0.5g polyvinylpyrrolidone (lubricant), 0.02g sodium benzoate (anticorrosive agent) and 3.5g ethylene glycol butyl ether (anti-freezing agent) are added by four batches, 30 minutes per batch. After finished adding, it is continued to stir for 3h under vacuum at a speed of 200rpm, then filtered and tested, so as to obtain the temperature-sensitive erasable gel ink.

### Embodiment 2

First of all, 60.0g deionized water, 1.5g potassium polyacrylate (dispersing agent), 9g sorbic alcohol (humectant) and 0.1g polysiloxane emulsion (foam suppressor) are added to the vacuum mixing reaction pot. And 60.0g temperature- sensitive microcapsule granules (vanishing temperature of 55°C) are added when stirring, till the pigments are evenly dispersed; Then 3g lithium based montmorillonite clay (rheological additives), 0.8g polyvinylpyrrolidone (lubricant), 0.04g pentadiene carboxylic acid (anticorrosive agent) and 5g diethylene glycol (anti-freezing agent) are added by four batches, 30 minutes per batch. After finished adding, it is continued to stir for 3h under vacuum at a speed of 200rpm, then filtered and tested, so as to obtain the said temperature-sensitive erasable gel ink.

### Embodiment 3

First of all, 55.0g deionized water, 1g ammonium polyacrylate (dispersing agent), 6g polyethylene propylene glycol (humectant) and 0.05g polysiloxane emulsion (foam suppressor) are added to the vacuum mixing reaction pot. And 50.0g temperature-sensitive microcapsule granules (vanishing temperature of 65°C) are added when stirring, till the pigment is uniformly dispersed; Then 2g ethyl oxide based polyurethane(rheological additives), 0.6g water soluble phosphate (lubricant), 0.02g sodium benzoate (anticorrosive agent) and 3g glycol (anti-freezing agent) are added by four batches, 30 minutes per batch. After finished adding, it is continued to stir for 3h under vacuum at a speed of 200rpm, then filtered and tested, so as to obtain the said temperature-sensitive erasable gel ink.

### Embodiment 4

First of all, 50.0g deionized water, 2g ammonium polyacrylate (dispersing agent), 4g N-methyl-2-pyrrolidone (humectant) and 0.05g polysiloxane emulsion (foam suppressor) are added to the vacuum mixing reaction pot. And 45.0g temperature- sensitive microcapsule granules (vanishing temperature of 45°C) are added when stirring, till the pigment is uniformly dispersed; Then 1.5g ethoxylation polyurethane (rheological additives), 0.4g water soluble phosphate (lubricant), 0.02g potassium sorbate (anticorrosive agent) and 2.5g natrium aceticum (anti-freezing agent) are added by four batches, 30 minutes per batch. After finished adding, it is continued to stir for 3h under vacuum at a speed of 200rpm, then filtered and tested to obtain the said temperature- sensitive erasable gel ink.
1. Writing performance evaluation
   (1) 4 different batches of temperature-sensitive erasable gel ink mentioned in Embodiment 1∼4 prepared with the same method respectively are selected and matched with #1 ordinary nib made of lead brass, #2 half needle type nib made of lead brass and #3 gourd head type nib made of lead brass. Each type of nib shall be matched with 4 batches of temperature-sensitive erasable gel ink respectively, therefore, for each embodiment, 12 temperature-sensitive erasable gel pen samples can be obtained, meanwhile, be compared with Control Group 1 and Control Group 2;
   (2) The temperature-sensitive erasable gel pens are made to line out three10cm-long scratches on a piece of paper. If scratches of the 12 samples of each embodiment are without interruption and fading, with uniform scratch width, and the nibs have no ink leakage when stopping writing, then the ink can be deemed as "good"; if scratches of 9∼11 samples are without interruption, with uniform scratch width, and the nibs have no ink leakage when stopping writing, then the ink can be deemed as "qualified"; if scratches of less than 9 samples are without interruption, with uniform scratch width, and the nibs have no ink leakage when stopping writing, then the ink can be deemed as "unqualified".
2. Timely erasability evaluation
   (1) 4 different batches of gel ink products mentioned in Embodiment 1∼4 prepared with the same method respectively are selected and matched with #1 ordinary nib made of lead brass, #2 half needle type nib made of lead brass and #3 gourd head type nib made of lead brass. Each type of nib shall be matched with 4 batches of temperature-sensitive erasable gel ink respectively, therefore, for each embodiment, 12 erasable gel pen samples can be obtained, meanwhile, be compared with Control Group 1 and Control Group 2;
   (2) The erasable gel pens are made to line out three 3cm-long scratches on a piece of paper, then wiped with a rubber immediately. If scratches of the 12 samples of each embodiment can be wiped off, without damaging the writing interface, then the ink can be deemed as "good"; if scratches of 9∼11 samples can be wiped off, without damaging the writing interface, then the ink can be deemed as "qualified"; if scratches of less than 9 samples can be wiped off, without damaging the writing interface, then the ink can be deemed as "unqualified".
3. Long-time erasability evaluation
   (1) 4 different batches of gel ink products mentioned in Embodiment 1∼4 prepared with the same method respectively are selected and matched with #1 ordinary nib made of lead brass, #2 half needle type nib made of lead brass and #3 gourd head type nib made of lead brass. Each type of nib shall be matched with 3 batches of erasable gel ink respectively, therefore, for each embodiment, 12 erasable gel pen samples can be obtained, meanwhile, be compared with Control Group 1 and Control Group 2;
   (2) The erasable gel pens are made to line out three 3cm-long scratches on a piece of paper, the scratches shall be kept for a week and then wiped off with a rubber. If scratches of the 12 samples of each embodiment can be wiped off, without damaging the writing interface, then the ink can be deemed as "good"; if scratches of 9∼11 samples can be wiped off, without damaging the writing interface, then the ink can be deemed as "qualified"; if scratches of less than 9 samples can be wiped off, without damaging the writing interface, then the ink can be deemed as "unqualified".
4. Re-writing performance evaluation
   (1) 4 different batches of gel ink products mentioned in Embodiment 1∼4 prepared with the same method respectively are selected and matched with #1 ordinary nib made of lead brass, #2 half needle type nib made of lead brass and #3 gourd head type nib made of lead brass. Each type of nib shall be matched with 3 batches of erasable gel ink respectively, therefore, for each embodiment, 12 erasable gel pen samples can be obtained, meanwhile, be compared with Control Group 1 and Control Group 2;
   (2) The erasable gel pens are made to line out three 3cm-long scratches on a piece of paper, wiped off with a rubber, and line out three 3cm-long scratches again at the original place. If scratches of the 12 samples of each embodiment are clear, even, without interruption, then the ink can be deemed as "good"; if scratches of 9∼11 samples are clear, even, without interruption, then the ink can be deemed as "qualified"; if scratches of less than of 9 samples are clear, even, without interruption, then the ink can be deemed as "unqualified".
5. Storage stability evaluation
   (1) 4 different batches of ink mentioned in Embodiment 1∼4 prepared with the same method respectively are selected. For each batch, three 10g ink samples will be adopted and put into the constant-temperature high temperature oven for 2 weeks under 60°C; then it is taken out and balanced to room temperature, and be observed the appearance and flow situation of the ink, whether there is obvious viscosity increase and granule aggregation, etc., meanwhile, be compared with Control Group 1 and Control Group 2;
   (2) If the 12 samples of each embodiment have no viscosity increase and granule aggregation, the ink can be deemed as "good "; if 9∼11 samples have no viscosity increase and granule aggregation, the ink can be deemed as "qualified"; if less than 9 samples have no viscosity increase and granule aggregation, the ink can be deemed as "unqualified".
6. Clarity and chroma shall be evaluated according to the following standards:
   (1) 4 different batches of gel ink products mentioned in Embodiment 1∼4 prepared with the same method respectively are selected and matched with #1 ordinary nib made of lead brass, #2 half needle type nib made of lead brass and #3 gourd head type nib made of lead brass, Each type of nib shall be matched with 3 batches of erasable gel ink respectively, therefore, for each embodiment, 12 erasable gel pen samples can be obtained, meanwhile, be compared with Control Group 1 and Control Group 2;
   (2) If both clarity and chroma of the 12 samples of each embodiment are better than that of Control Group 1 and Control Group 2, the ink can be deemed as "excellent+"; if both clarity and chroma of 9∼11 samples are better than that of Control Group 1 and Control Group 2, the ink can be deemed as "excellent"; if both clarity and chroma of less than 9 samples are better than that of Control Group 1 and Control Group 2, the ink can be deemed as "good".

**Table 1 Product Performance Indexes**

| Performance index | Embodiment 1 | Embodiment 2 | Embodiment 3 | Embodiment 4 | Control group 1 | Control group 2 |
|---|---|---|---|---|---|---|
| Writing performance | Good | Good | Good | Good | Good | Good |
| Timely erasability | Good | Good | Good | Good | Good | Good |
| Long-time erasability | Good | Good | Good | Good | Good | Good |
| Re-writing performance | Good | Good | Good | Good | Good | Good |
| Storage stability | Good | Good | Good | Good | Good | Good |
| Definition | Excellent⁺ | Excellent | Excellent⁺ | Excellent⁺ | Excellent | Excellent |
| Chroma | Excellent | Excellent⁺ | Excellent | Excellent⁺ | Excellent | Excellent |
| Viscosity | 1900 | 2000 | 1800 | 1900 | 2000 | 1800 |
| Average granule size | 4um | 5um | 4um | 4um | 4um | 5um |

Preferable embodiments of the invention disclosed above are only for illustrating the invention. They have neither stated all the details specifically, nor restricting the invention to be only the stated specific embodiments. Evidently, the embodiments can be modified and changed a lot as per the contents of the invention. The specification has selected and given specific description to these embodiments, so as to interpret the principle and practical application in a better way, thus enabling technicians of the technical field to understand and utilize the invention in a better way. The invention is only restricted by the claims as well as all of its coverage and equivalents.

## Claims

1. A temperature-sensitive erasable gel ink is **characterized in that** it is made from the compositions of the following weight percent:
| | |
|---|---|
| temperature-sensitive microcapsule granule | 38-60 weight percent |
| dispersing agent | 0.5-3 weight percent |
| humectant | 3-10 weight percent |
| foam suppressor | 0.01-0.1 weight percent |
| rheological additives | 0.5-3 weight percent |
| lubricant | 0.5-1 weight percent |
| anticorrosive agent | 0.02-0.04 weight percent |
| anti-freezing agent | 3-5 weight percent |
| deionized water | 24-66 weight percent |
the dispersing agent is one or more of sodium polyacrylate, potassium polyacrylate, ammonium polyacrylate and polyol fatty acid ester;
the foam suppressor is one or more of polysiloxane emulsion, polybasic alcohol, polyol ether and wax dispersion emulsion.

2. The temperature-sensitive erasable gel ink of Claim 1 is **characterized in that**, it further comprises pH conditioning agent of 0-5 weight percent.

3. The temperature-sensitive erasable gel ink of Claim 1 is **characterized in that**, the rheological additive is resin thickener, and the resin thickener is one or more of cellulose-based thickener, polymer modified clay thickener or associative thickener.

4. The temperature-sensitive erasable gel ink of Claim 3 is **characterized in that**, weight percent of the resin thickener is 1-3 weight percent.

5. The temperature-sensitive erasable gel ink of Claim 1 is **characterized in that**, the temperature-sensitive microcapsule granule is reversible thermo vanishing microcapsule pigment, which comprises electron donor color rendering organic compound (a), electron acceptance compound (b) and reaction medium for controlling the chromogenic reaction of (a) and (b).

6. The temperature-sensitive erasable gel ink of Claim 5 is **characterized in that**, vanishing temperature of the reversible thermo disappearance microcapsule pigment is 45-75°C.

7. The temperature-sensitive erasable gel ink of Claim 1 is **characterized in that**, the humectant is one or more of N-methyl-2-pyrrolidone, sorbic alcohol, xylosic alcohol, polybasic alcohol or polyethylene propylene glycol.

8. The temperature-sensitive erasable gel ink of Claim 1 is **characterized in that**, the lubricant is one or more of polyvinylpyrrolidone or water-soluble phosphate.

9. A method of preparing the temperature-sensitive erasable gel ink of Claim 1-8 is **characterized in that**, it includes the following steps: Provide all compositions said in Claim 1; add the said compositions to the vacuum reaction pot, which shall be stirred evenly at a speed of 200rpm for 3h, filtered and tested, so as to obtain the temperature-sensitive erasable gel ink.

10. A writing tool is **characterized in that** it has a beam barrel accommodating the temperature-sensitive erasable gel ink of Claim 1-8 and a handwriting exporting the temperature-sensitive erasable gel ink in the beam barrel.
